# FASCICULE DE BREVET EUROPEEN

(11) **EP 0 852 613 B1**
(45) Date de publication et mention de la délivrance du brevet: **16.08.2001**
(21) Numéro de dépôt: 96931843.5
(22) Date de dépôt: 13.09.1996
(51) Int. Cl.: C09J 123/08

(54) **COLLE THERMOFUSIBLE AUTO-ADHESIVE POUR RUBANS ADHESIFS**
SELBSTHAFTENDER SCHMELZKLEBSTOFF FÜR KLEBEBÄNDER
HOT-MELT PRESSURE SENSITIVE ADHESIVE FOR ADHESIVE STRIPS

(30) Priorité: 26.09.1995 FR 9511253
(43) Date de publication de la demande: 15.07.1998
(73) Titulaire: Ato Findley S.A., 92800 Puteaux (FR)
(72) Inventeur: BAUDUIN, François, F-60280 Margny-Les-Compiegne (FR); DREYFUS, Thierry, F-95490 Vaureal (FR); BORDAT, Jean-Marie, F-60170 Bailly (FR)
(74) Mandataire: Haicour, Philippe
(86) Numéro de dépôt international: FR9601425
(87) Numéro de publication internationale: WO9712008

(56) Documents cités:
- DE-A- 2 044 497
- US-A- 4 247 428
- US-A- 4 358 557
- US-A- 5 362 792

## Description

L'invention concerne une composition thermofusible auto-adhésive et son utilisation pour la fabrication d'étiquettes et de rubans adhésifs et plus particulièrement des rubans destinés à être en contact avec la peau.

Dans la fabrication des rubans adhésifs, on utilise traditionnellement des colles en suspension ou en solution dans des solvants organiques. Lors de la mise en oeuvre de ces colles, il est nécessaire de procéder à une étape d'évaporation du solvant ce qui a pour conséquences d'une part de limiter la cadence de production et d'autre part de produire des effluents à caractère toxique dont l'élimination s'avère coûteuse et délicate.

Afin d'éviter l'emploi de solvants, il a été proposé d'utiliser des colles thermofusibles auto-adhésives.

Dans WO 93/23488, on propose un adhésif permettant le collage de matériaux à faible énergie de surface, par exemple un film de polyéthylène et un non-tissé. Cet adhésif comprend 75-98 % d'un copolymère dibloc A-B, dans lequel A est majoritairement constitué de polystyrène ou ses dérivés et B est le poly-1,3-butadiène, et un mélange constitué d'une résine tackifiante solide et d'une résine tackifiante liquide ou huileuse.

Dans US 5,290,842, on décrit une composition pour l'encollage d'étiquettes qui présente une bonne cohésion à température ambiante. Cette composition comprend un premier élastomère, par exemple le polybutadiène, et un deuxième élastomère ayant une température de transition vitreuse supérieure à celle du premier élastomère, par exemple le polyisoprène, et un agent tackifiant miscible avec le deuxième élastomère.

Le brevet EP 0104005-A décrit une composition adhésive pour le collage de protections féminines sur les vêtements. Cette composition comprend un polymère viscoélastique de type A-B-A, dans lequel B représente une polyoléfine, par exemple un copolymère éthylène-butylène, et A représente un polystyrène, et une résine tackifiante.

Dans WO 93/10734, on propose un adhésif de positionnement pour protections féminines sur la soie, le coton et les fibres synthétiques. Cet adhésif comprend 6-25 % d'un copolymère de formule (A-B)n -Y, dans laquelle Y est un agent de couplage multivalent, A est un monomère vinylique substitué par un radical aromatique et B est le polybutadiène, 30-70 % d'une résine tackifiante compatible et 10-40 % d'une huile plastifiante.

US-A-4 358 557 concerne une composition adhésive apte à être utilisée comme adhésif thermofusible, comprenant un mélange de :
(a) environ 10-20% en poids, en particulier environ 8 à 15% en poids, d'au moins une résine d'hydrocarbure aromatique ayant un point de ramollissement de moins de 50°C ;
(b) environ 30 à 40% en poids, en particulier environ 30 à 35% en poids, d'au moins un copolymère éthylène-acétate de vinyle ;
(c) environ 35 à 55% en poids, en particulier environ 45 à 50% en poids, d'au moins une résine tackifiante choisie dans le groupe constitué par les résines d'hydrocarbures, les résines polyterpéniques et les résines d'esters de colophane ; et
(d) environ 2,5 à 10% en poids, en particulier environ 5% en poids, d'une cire de paraffine ayant un point de ramollissement Bille/Anneau d'environ 120 à 160°C.

US-A-4 247 428 décrit un adhésif thermofusible se composant :
- d'environ 35 à 45% en poids d'un copolymère d'éthylène et d'acétate de vinyle et d'environ 5 à 15% en poids d'un copolymère d'éthylène et d'acrylate d'alkyle ;
- d'environ 35 à 45% en poids d'une résine modificative ; et
- d'environ 5 à 10% en poids d'une huile de traitement riche en paraffine.

Les colles thermoplastiques auto-adhésives qui viennent d'être citées, si elles permettent d'éviter l'emploi de solvant, ne sont cependant pas totalement satisfaisantes. Ainsi, les rubans adhésifs qui en sont revêtus présentent, après arrachement, une tendance au transfert de la colle sur le support. En outre, les rubans adhésifs en contact avec la peau présentent une mauvaise tenue à la transpiration.

La présente invention propose une nouvelle composition thermofusible auto-adhésive présentant une grande cohésion et une bonne résistance à l'humidité, cette composition étant caractérisée en ce qu'elle consiste en
a) 30 à 50% en poids d'un ou plusieurs copolymères choisis parmi le groupe constitué par les copolymères éthylène-acétate de vinyle, les copolymères éthylène-acrylate de méthyle et les copolymères éthylène-acrylate de butyle ;
b) 10 à 40% en poids d'une résine tackifiante solide présentant un point de ramollissement Bille/Anneau au moins égal à 60°C de préférence supérieur à 60°C;
c) 10 à 40% en poids d'une résine tackifiante liquide présentant un point de ramollissement Bille/Anneau inférieur à 60°C ;
d) 0,1 à 2% en poids d'un anti-oxydant.

La présente invention a également pour objet l'utilisation de ladite composition thermofusible auto-adhésive pour la fabrication d'étiquettes et de rubans adhésifs et plus particulièrement de rubans adhésifs destinés à être collés sur la peau tels que par exemple les bandages et les pansements.

Le copolymère selon l'invention est généralement choisi parmi les copolymères présentant une teneur en acétate de vinyle, acrylate de méthyle ou de butyle compris entre 15 et 65 % et de préférence 30 et 50 % en poids.

De manière préférentielle, on utilise des copolymères présentant un indice de fluidité (Melt Index) compris entre 1 et 1000 et de préférence 2 et 500.

De tels copolymères peuvent être obtenus de manière conventionnelle par polymérisation radicalaire haute pression à partir d'éthylène et d'acétate de vinyle ou d'acrylate de méthyle ou de butyle (voir par exemple US 5 298 582).

La résine tackifiante solide selon l'invention est généralement choisie parmi les esters de colophane naturelle ou modifiée, par exemple dimérisée, hydrogénée ou polymérisée, tels que les esters de pentaérythritol, diéthylène glycol et glycérol, les résines polyterpéniques, par exemple l'α-pinène dipentène, les copolymères de terpènes et de monomères aromatiques tels que le styrène, le vinyltoluène et l'α-méthyl-styrène, les résines terpènephénoliques, par exemple Dertophène® T commercialisé par DRT, les résines d'hydrocarbures à caractère aliphatique et/ou aromatique non hydrogénées, partiellement ou totalement hydrogénées, et les mélanges de ces composés.

De préférence, et notamment lorsque la colle est destinée à entrer en contact avec la peau, on utilise les résines d'hydrocarbures.

De manière avantageuse, on utilise de telles résines solides présentant un point de ramollissement Bille/Anneau compris entre 60 et 140°C et de préférence 80 et 120°C.

La résine tackifiante liquide selon l'invention est généralement choisie parmi les esters de colophane naturelle ou modifiée, par exemple dimérisée, hydrogénée ou polymérisée, par exemple les esters de glycérol, de di- et de triéthylène glycol, les résines polyterpéniques, par exemple l'α-pinène dipentène, les copolymères de terpènes et de monomères aromatiques tels que le styrène, le vinyltoluène et l'α-méthyl-styrène, les résines terpènephénoliques, les résines d'hydrocarbures à caractère aliphatique et/ou aromatique non hydrogénées, partiellement ou totalement hydrogénées et les mélanges de ces composés.

De préférence, et notamment lorsque la colle est destinée à entrer en contact avec la peau, on utilise les résines polyterpéniques et les résines d'hydrocarbures.

De manière préférentielle, on utilise de telles résines liquides présentant un point de ramollissement Bille/Anneau inférieur à 40°C.

L'anti-oxydant est généralement choisi parmi les composés de type phénol à encombrement stérique tel que l'IRGANOX® commercialisé par CIBA GEIGY, les amines, les phosphites et les mélanges de ces composés.

La composition thermofusible auto-adhésive selon l'invention est obtenue par mélange des différents constituants précités à une température généralement comprise entre 120 et 150°C.

La composition thermofusible auto-adhésive selon l'invention consiste en de préférence 30 à 40 % de copolymère, de préférence 15 à 35 de résine tackifiante solide, de préférence 15 à 35 % de résine tackifiante liquide, et de 0,1 à 2 % d'anti-oxydant.

Lorsque la composition est destinée à être en contact avec la peau, on préfère éviter l'emploi de fluidifiant.

La composition thermofusible auto-adhésive conforme à l'invention peut être utilisée pour la préparation de tout type d'étiquettes et de rubans adhésifs. A titre purement illustratif, on peut citer l'enduction, par exemple au moyen d'une buse à livre, de supports tels que les films à base de polyéthylène, polypropylène, polychlorure de vinyle.

Du fait de ses propriétés de résistance à la transpiration, la composition conforme à l'invention est particulièrement recommandée pour la préparation de rubans adhésifs à usage cutané tels que les pansements et les emplâtres adhésifs (strappings). De tels rubans présentent, en outre, une adhésivité plus importante à la température d'utilisation proche de 37°C qu'à la température ambiante, ce qui permet un repositionnement aisé du ruban sur la peau en cas de mauvaise application.

Les exemples qui suivent permettent d'illustrer l'invention.

Dans les exemples, la résistance au cisaillement sous contrainte (Holding Power) est mesurée selon la norme PSTC 7.

Le pelage à 180° est mesuré selon la norme PSTC 1.

Le test de pelage en "T" est mesuré selon la méthode qui consiste à replier sur lui-même le support enduit de l'adhésif à tester, exercer une pression manuelle modérée sur ledit support replié et décoller les parties ainsi collées. Le test est correct lorsque le support conserve l'aspect et les propriétés adhésives du support avant collage.

### EXEMPLE 1

On réalise une composition thermofusible auto-adhésive par mélange des composés suivants (en % en poids) :
- EVA 4055 : 32,0
   (copolymère éthylène-acétate de vinyle; acétate de vinyle : 40 %; Melt Index : 55; BAYER)
- Résine de pétrole liquide (ECR® 2520; EXXON) : 38,8
- Résine de pétrole solide (ECR® 368 LC; EXXON) : 29,0
- Anti-oxydant (IRGANOX® 1010; CIBA GEIGY) : 0,2

La composition ainsi obtenue est appliquée sur film en polychlorure de vinyle à raison de 40 g/m² pour former un pansement.

Le support enduit présente un "Holding Power" égal à 50 mm et un pelage à 180° égal à 18 N/25 mm à 23°C et 36 N/25 mm à 40°C.

Le test de pelage en "T" est correct.

Après application du pansement sur la peau, on constate que la rupture sur la peau est adhésive, sans transfert de la colle sur la peau.

### EXEMPLE 2

On procède dans les conditions de l'exemple 1 en présence des composés suivants (en % en poids) :
- EVA 4055 : 30,0
   (copolymère éthylène-acétate de vinyle; acétate de vinyle : 40 %; Melt Index : 55; BAYER)
- Résine de pétrole liquide (ECR® 2520; EXXON) : 36,8
- Résine de pétrole solide (ESCOREZ® 5320; EXXON) : 33,0
- Anti-oxydant (IRGANOX® 1010; CIBA GEIGY) : 0,2

Le support enduit (pansement) présente un "Holding Power" égal à 80 mm et un pelage à 180° égal à 19 N/25 mm à 23°C.

Le test de pelage en "T" est correct.

Après application du support enduit sur la peau, on constate que la rupture sur la peau est adhésive, sans transfert de la colle sur la peau.

### EXEMPLE 3

On procède dans les conditions de l'exemple 1 en présence des composés suivants (en % en poids) :
- LOTRYL® 28MA175 : 32,0
   (copolymère éthylène-acrylate de méthyle; acrylate de méthyle : 28 %; Melt Index : 175; ELF ATOCHEM S.A.)
- Résine de pétrole liquide (ECR® 2520; EXXON) : 29,0
- Résine de pétrole solide (ECR® 385; EXXON) : 38,8
- Anti-oxydant (IRGANOX® ; CIBA GEIGY) : 0,2

Le support enduit (pansement) présente un "Holding Power" égal à 7 mm et un pelage à 180° égal à 25 N/25 mm à 23°C.

Le test de pelage en "T" est correct.

Après application du support enduit sur la peau, on constate que la rupture sur la peau est adhésive, sans transfert de la colle sur la peau.

### EXEMPLE 4

On réalise une composition thermofusible auto-adhésive par mélange des composés suivants (en % en poids) :
- LOTRYL® 28MA175 : 30,0
   (copolymère éthylène-acrylate de méthyle; acrylate de méthyle : 28 %; Melt Index : 175; ELF ATOCHEM S.A.)
- LOTRYL® 35BA320 : 15,0
   (copolymère éthylène-acrylate de butyle ; acrylate de butyle : 35 % ; Melt Index : 320 ; ELF ATOCHEM S.A.)
- Résine de pétrole liquide (ECR® 2520; EXXON) : 25,0
- Résine de pétrole solide (ECR® 6372; EXXON) : 29,8
- Anti-oxydant (IRGANOX® 1010 ; CIBA GEIGY) : 0,2

La composition ainsi obtenue présente une viscosité Brookfield à 160°C égale à 6000 mPa.s et un point de ramollissement Bille/Anneau égal à 66°C.

Cette composition est appliquée sur un film en polychlorure de vinyle à raison de 40 g/m² pour former un pansement.

Le test de pelage en "T" est correct.

Après application du pansement sur la peau, on constate que la rupture sur la peau est adhésive, sans transfert de la colle sur la peau.

## Revendications

1. Composition thermofusible auto-adhésive caractérisée en ce qu'elle consiste en :
a) *30 à 50% en poids d*'un ou plusieurs copolymères choisis parmi le groupe constitué par les copolymères éthylène-acétate de vinyle, les copolymères éthylène-acrylate de méthyle et les copolymères éthylène-acrylate de butyle;
b) *10 à 40% en poids d*'une résine tackifiante solide *présentant un point de ramollissement Bille/Anneau au moins égal à 60°C* ;
c) *10 à 40% en poids d*'une résine tackifiante liquide *présentant un point de ramollissement Bille/Anneau inférieur à 60°C ;*
d) *0,1 à 2% en poids d*'un anti-oxydant.

2. Composition selon la revendication 1,
caractérisée en ce que la teneur en acétate de vinyle, acrylate de méthyle ou acrylate de butyle dans le copolymère *(a)* est comprise entre 30 et 50%.

3. Composition selon la revendication 2,
caractérisée en ce que le copolymère *(a)* présente un indice de fluidité compris entre 1 et 1000.

4. Composition selon l'une des revendications 1 à 3, caractérisée en ce que la résine tackifiante solide *(b)* présente un point de ramollissement Bille/Anneau au moins égal à 60°et 140°C ;

5. Composition selon la revendication 4,
caractérisée en ce que la résine *(b)* est choisie parmi les esters de colophane, les esters de pentaérythritol, les résines polyterpéniques, les copolymères de terpènes et de monomères aromatiques, les résines terpènephénoliques, les résines d'hydrocarbures à caractère aliphatique et/ou aromatique et les mélanges de ces composés.

6. Composition selon l'une des revendications 1 à 5, caractérisée en ce que la résine tackifiante liquide *(c)* présente un point de ramollissement Bille/Anneau inférieur à 40°C.

7. Composition selon la revendication 6, caractérisée en ce que la résine *(c)* est choisie parmi les esters de colophane, les esters de glycérol, de di- ou de triéthylène glycol, les résines polyterpéniques, les copolymères de terpènes et de monomères aromatiques, les résines terpènephénoliques, les résines d'hydrocarbures à caractère aliphatique et/ou aromatique et les mélanges de ces composés.

8. Composition selon l'une des revendications 1 à 7, caractérisée en ce qu'elle comprend de 30 à *40%* en poids de copolymère *(a)*, de *15* à *35%* en poids de résine tackifiante solide *(b)*, de *15* à *35%* en poids de résine tackifiante liquide *(c)* et de 0,1 à 2% en poids d'anti-oxydant *(d)*.

9. Utilisation de la composition selon l'une des revendications 1 à 8 pour la préparation d'étiquettes et de rubans adhésifs.

10. Utilisation selon la revendication 9, caractérisée en ce que le ruban est destiné à être appliqué sur la peau.

11. Ruban adhésif renfermant la composition selon l'une quelconque des revendications 1 à 8.

12. Pansement adhésif renfermant la composition selon l'une quelconque des revendications 1 à 8.

13. Emplâtre adhésif renfermant la composition selon l'une quelconque des revendications 1 à 8.

14. Etiquette adhésive renfermant la composition selon l'une quelconque des revendications 1 à 8.

## Patentansprüche

1. Selbsthaftender Schmelzklebstoff, dadurch gekennzeichnet, daß er besteht aus:
(a) 30 bis 50 Gew.-% eines oder mehrerer Copolymere, die unter den Ethylen-Vinylacetat-Copolymeren, Ethylen-Methylacrylat-Copolymeren und Ethylen-Butylacrylat-Copolymeren ausgewählt sind;
(b) 10 bis 40 Gew.-% eines festen Klebrigmacherharzes, das einen Erweichungspunkt Ring und Kugel von mindestens 60 °C aufweist;
(c) 10 bis 40 Gew.-% eines flüssigen Klebrigmacherharzes, das einen Erweichungspunkt Ring und Kugel unter 60°C aufweist; und
(d) 0,1 bis 2 Gew.-% Antioxidationsmittel.

2. Schmelzklebstoff nach Anspruch 1, dadurch gekennzeichnet, daß der Mengenanteil von Vinylacetat, Methylacrylat oder Butylacrylat in dem Copolymer (a) im Bereich von 30 bis 50 % liegt.

3. Schmelzklebstoff nach Anspruch 2, dadurch gekennzeichnet, daß das Copolymer (a) einen Schmelzindex von 1 bis 1000 aufweist.

4. Schmelzklebstoff nach einem der Ansprüche 1 bis 3, dadurch gekennzeichnet, daß das feste Klebrigmacherharz (b) einen Erweichungspunkt Ring und Kugel von mindestens 60 °C bis 140 °C aufweist.

5. Schmelzklebstoff nach Anspruch 4, dadurch gekennzeichnet, daß das Harz (b) unter den Kolophoniumestern, Pentaerythritestern, Polyterpenharzen, Copolymeren von Terpenen und aromatischen Monomeren, Terpenphenolharzen, aliphatischen und/oder aromatischen Kohlenwasserstoffharzen und Gemischen dieser Verbindungen ausgewählt ist.

6. Schmelzklebstoff nach einem der Ansprüche 1 bis 5, dadurch gekennzeichnet, daß das flüssige Klebrigmacherharz (c) einen Erweichungspunkt Ring und Kugel unter 40 °C aufweist.

7. Schmelzklebstoff nach Anspruch 6, dadurch gekennzeichnet, daß das Harz (c) unter den Kolophoniumestern, Glycerinestern, Di- oder Triethylenglykolestern, Polyterpenharzen, Copolymeren von Terpenen und aromatischen Monomeren, Terpenphenolharzen, aliphatischen und/oder aromatischen Kohlenwasserstoffharzen und Gemischen dieser Verbindungen ausgewählt ist.

8. Schmelzklebstoff nach einem der Ansprüche 1 bis 7, dadurch gekennzeichnet, daß er 30 bis 40 Gew.-% Copolymer (a), 15 bis 35 % festen Klebrigmacher (b), 15 bis 35 Gew.-% flüssigen Klebrigmacher (c) und 0,1 bis 2 Gew.-% Antioxidationsmittel (d) enthält.

9. Verwendung eines Schmelzklebstoffes nach einem der Ansprüche 1 bis 8 zur Herstellung von Haftetiketten und Klebebändern.

10. Verwendung nach Anspruch 9, dadurch gekennzeichnet, daß das Klebeband auf die Haut aufgebracht werden soll.

11. Klebeband mit einem Schmelzklebstoff nach einem der Ansprüche 1 bis 8.

12. Haftverband mit einem Schmelzklebstoff nach einem der Ansprüche 1 bis 8.

13. Pflaster mit einem Schmelzklebstoff nach einem der Ansprüche 1 bis 8.

14. Haftetiketten mit einem Schmelzklebstoff nach einem der Ansprüche 1 bis 8.

## Claims

1. Pressure-sensitive hot-melt adhesive composition characterized in that it consists of:
a) 30 to 50% by weight of one or more copolymers chosen from the group consisting of ethylene-vinyl acetate copolymers, ethylene-methyl acrylate copolymers and ethylene-butyl acrylate copolymers;
b) 10 to 40% by weight of a solid tackifying resin having a ring-and-ball softening point at least equal to 60°C;
c) 10 to 40% by weight of a liquid tackifying resin having a ring-and-ball softening point of less than 60°C;
d) 0.1 to 2% by weight of an antioxidant.

2. Composition according to Claim 1, characterized in that the vinyl acetate, methyl acrylate or butyl acrylate content in the copolymer (a) is between 30 and 50%.

3. Composition according to Claim 2, characterized in that the copolymer (a) has a melt flow index of between 1 and 1000.

4. Composition according to one of Claims 1 to 3, characterized in that the solid tackifying resin (b) has a ring-and-ball softening point at least equal to 60° and 140°C.

5. Composition according to Claim 4, characterized in that the resin (b) is chosen from rosin esters, pentaerythritol esters, polyterpene resins, copolymers of terpenes and of aromatic monomers, terpenephenolic resins, hydrocarbon resins of aliphatic and/or aromatic nature and mixtures of these compounds.

6. Composition according to one of Claims 1 to 5, characterized in that the liquid tackifying resin
(c) has a ring-and-ball softening point of less than 40°C.

7. Composition according to Claim 6, characterized in that the resin (c) is chosen from rosin esters, glycerol, di- or triethylene glycol esters, polyterpene resins, copolymers of terpenes and of aromatic monomers, terpenephenolic resins, hydrocarbon resins of aliphatic and/or aromatic nature and mixtures of these compounds.

8. Composition according to one of Claims 1 to 7, characterized in that it includes from 30 to 40% by weight of copolymer (a), from 15 to 35% by weight of solid tackifying resin (b), from 15 to 35% by weight of liquid tackifying resin (c) and (d), from 0.1 to 2% by weight of antioxidant.

9. Use of the composition according to one of Claims 1 to 8 for the preparation of adhesive labels and tapes.

10. Use according to Claim 9, characterized in that the tape is intended to be applied to the skin.

11. Adhesive tape containing the composition according to any one of Claims 1 to 8.

12. Adhesive dressing containing the composition according to any one of Claims 1 to 8.

13. Adhesive strapping containing the composition according to any one of Claims 1 to 8.

14. Adhesive label containing the composition according to any one of Claims 1 to 8.
